## Europäisches Patentamt
## European Patent Office
## Office européen des brevets

(19)

(11) Veröffentlichungsnummer: **0 112 984**

**B1**

(12)

# EUROPÄISCHE PATENTSCHRIFT

(45) Veröffentlichungstag der Patentschrift:
17.12.86

(51) Int. Cl.⁴: **D 02 J 13/00,** F 16 K 17/16, F 16 K 17/38

(21) Anmeldenummer: 83109996.5

(22) Anmeldetag: 06.10.83

(54) Heizbare Galette.

(30) Priorität: 06.12.82 CH 7074/82

(43) Veröffentlichungstag der Anmeldung:
11.07.84 Patentblatt 84/28

(45) Bekanntmachung des Hinweises auf die Patenterteilung:
17.12.86 Patentblatt 86/51

(84) Benannte Vertragsstaaten:
CH DE FR GB IT LI NL

(56) Entgegenhaltungen:
EP-A-0 030 820
CH-A-557 016
DE-A-2 358 428
DE-A-2 929 620
US-A-2 742 179
US-A-3 080 091

(73) Patentinhaber: **MASCHINENFABRIK RIETER AG, Postfach 290, CH- 8406 Winterthur (CH)**

(72) Erfinder: **von Burg, Paul, Johannisstrasse 31, CH- 8404 Winterthur (CH)**
Erfinder: **Wirz, Armin, Im Grund, CH- 8475 Ossingen (CH)**
Erfinder: **Graf, Felix, Wylandstrasse 12, CH- 8400 Winterthur (CH)**

EP 0 112 984 B1

## Beschreibung

Die vorliegende Erfindung betrifft eine heizbare Galette z.B. Streckrolle zur Aufnahme von Fäden, z.B. Endlosfilamenten, mit einem allseitig geschlossenen Hohlraum für ein durch eine Heizvorrichtung verdampfbares Medium.

Eine Galette dieser Art ist aus der Schweizer-Patentschrift Nr. 557016 (äquivalente Patentschriften sind F-7330371, IT-990155 und GB-1438841) bekannt. Zum Heizen des verdampfbaren Mediums wird eine an sich bekannte Induktionsspule verwendet. Zur Regelung der Heizleistung wird in an sich bekannter Weise ein erster Temperaturfühler, zur Absicherung gegen übermässige Temperaturerhöhung, in an sich bekannter Weise ein zweiter Temperaturfühler als Sicherheits-Steuerelement vorgesehen, der beim Ueberschreiten einer vorgegebenen Temperatur das Heizsystem ausschaltet. Diese Regelung bzw. Steuerung der Heizleistung ist an sich nicht Gegenstand der Erfindung und deshalb nicht weiter beschrieben.

In der Praxis kann es jedoch vorkommen, dass aus irgendeinem hier nicht im Detail genannten Grunde, z.B. durch manuelle oder elektrische Einflüsse, die Regelung wie auch die Sicherheits-Steuerung derart ausfällt, dass das Medium derart überhitzt wird, dass ein Schaden an der Galette entstehen kann.

Dieser Nachteil soll erfindungsgemäss dadurch behoben werden, dass der Hohlraum mit einer Abströmsicherung verbunden ist,

dass in einem zwischen dem Hohlraum und der Atmosphäre liegenden, die Abströmsicherung beinhaltenden Abströmweg eine Stelle als Drosselstelle verengt ist und, dass die Drosselstelle derart verengt ist, dass das Abströmen des Mediums mindestens 0,5 und höchstens 20 Sekunden dauert.

Die Abströmsicherung kann dabei eine Schmelzsicherung sein, bei welcher bei einer vorgegebenen Temperatur ein in einer Abströmbohrung vorhandenes, die Abströmbohrung unter normalen Betriebsbedingungen luftdicht abschliessendes Lot schmilzt und dadurch die Abströmbohrung für das Abströmen des Mediums freigibt oder eine Berstscheibe sein, welche unter normalen Betriebsbedingungen eine Abströmöffnung dicht abschliesst und bei einem vorgegebenen Druck im Bereich der Abströmöffnung birst und dadurch die Abströmöffnung für das Abströmen des Mediums freigibt.

Die durch die Erfindung erreichten Vorteile sind im wesentlichen darin zu sehen, dass es sich bei dieser Sicherungsart nicht um eine manuell oder elektrisch beeinträchtigbare Sicherung handelt, sondern um eine Sicherung, die direkt auf einen infolge Ueberhitzung entstehenden Druck oder auf die dazugehörige Temperatur reagiert.

Im folgenden wird die Erfindung anhand von lediglich Ausführungswege darstellenden Zeichnungen näher erläutert. Es zeigt:

Fig. 1 eine heizbare Galette des Standes der Technik ausschnittsweise und halbschematisch dargestellt,

Fig. 2 eine weitere heizbare Galette des Standes der Technik, ausschnittsweise und halbschematisch dargestellt,

Fig. 3 ein Ausschnitt aus der Galette von Fig. 1 und 2, vergrössert und mit einer erfindungsgemässen Abströmsicherung dargestellt,

Fig. 4 die Abströmsicherung von Fig. 3, vergrössert und teilweise im Schnitt dargestellt,

Fig. 5 ein Ausschnitt aus der Galette von Fig. 1 oder 2, vergrössert und mit einer weiteren erfindungsgemässen Abströmsicherung dargestellt,

Fig. 6 die Abströmsicherung von Fig. 5, vergrössert und mit den einzelnen Teilen davon dargestellt,

Fig. 7 die Abströmsicherung von Fig. 6 als Ganzes zusammengesetzt.

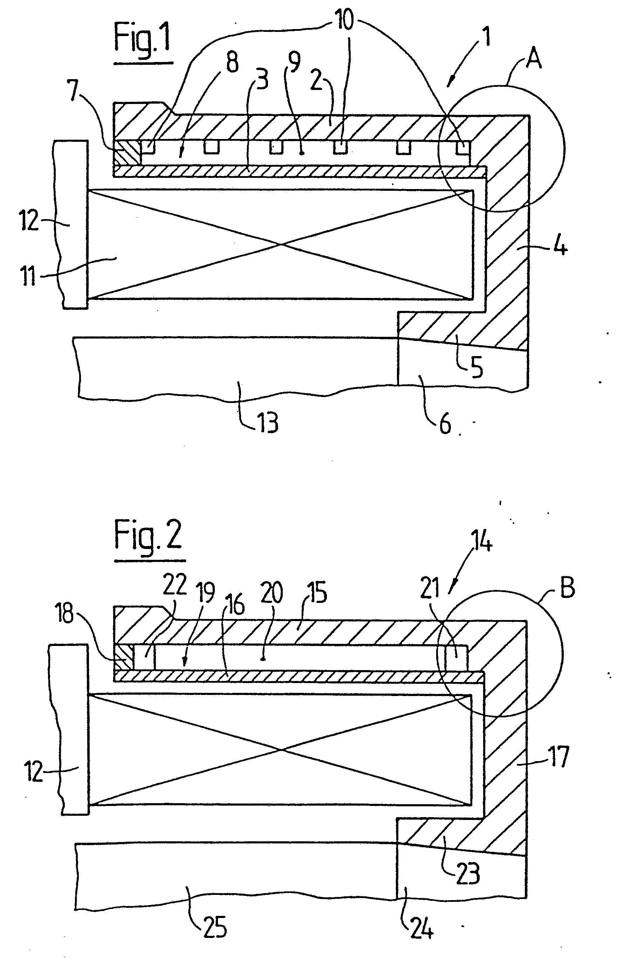

Eine Galette 1 (Fig. 1) weist im wesentlichen eine zylindrische äussere Mantelwand 2 und in geeignetem radialen Abstand davon eine ebenfalls etwa zylindrische innere Mantelwand 3 auf. Die Mantelwände 2 und 3 sind an einer der beiden Stirnseiten durch eine gemeinsame scheibenförmige Stirnwand 4 miteinander verbunden, welche im zentralen Teil als Nabe 5 zur Befestigung der Galette 1 auf dem konischen Endteil 6 einer Welle 13 ausgebildet ist. An dem der Stirnwand 4 gegenüberliegenden Stirnende ist die innere Mantelwand 3 an der äusseren Mantelwand 2 durch ein ringförmiges Anschlussteil 7 abgestützt. Die äussere Mantelwand 2, der Abschlussteil 7, die innere Mantelwand 3 und die Stirnwand 4 sind an den gegenseitigen Berührungsstellen derart miteinander verbunden, dass dadurch ein hermetisch abgeschlossener Hohlraum 8 entsteht. Der Hohlraum 8 ist umfänglich durch Zwischenwände 9 begrenzt, welche für den Durchfluss eines in die Galette einzufüllenden Mediums mit Durchtrittsöffnungen 10 versehen sind. Eine stationäre Heizvorrichtung 11 ist an einem Maschinengestell 12 befestigt. Die Welle 13 ist mit einem Antriebsmotor (nicht gezeigt) verbunden.

Eine weitere Galette 14 (Fig. 2) umfasst in analoger Weise zur Galette von Fig. 1 eine zylindrische äussere Mantelwand 15, eine zylindrische innere Mantelwand 16, eine Stirnwand 17 sowie ein Abschlussteil 18, welche in analoger Weise derart miteinander verbunden sind, dass ein hermetisch abgeschlossener Hohlraum 19 gebildet wird. Der Hohlraum 19 ist durch Zwischenwände 20 abgegrenzt, welche jedoch nicht dieselbe Länge wie der Hohlraum 19 haben. Dadurch entstehen an beiden stirnseitigen Enden der Zwischenwände 20 Oeffnungen 21 resp. 22, welche ein Durchtreten des Mediums von einer Kammer 19 zur benachbarten Kammer 19 zulassen.

Die Stirnwand ist ausserdem mit einer Nabe 23 versehen, welche mit einem konischen Endteil 24 einer Welle 25 verbunden ist. Die Welle 25 wird durch einen Antriebsmotor (nicht gezeigt) angetrieben. Als Heizelement gilt das in Fig. 1 bereits gezeigte Heizelement 11.

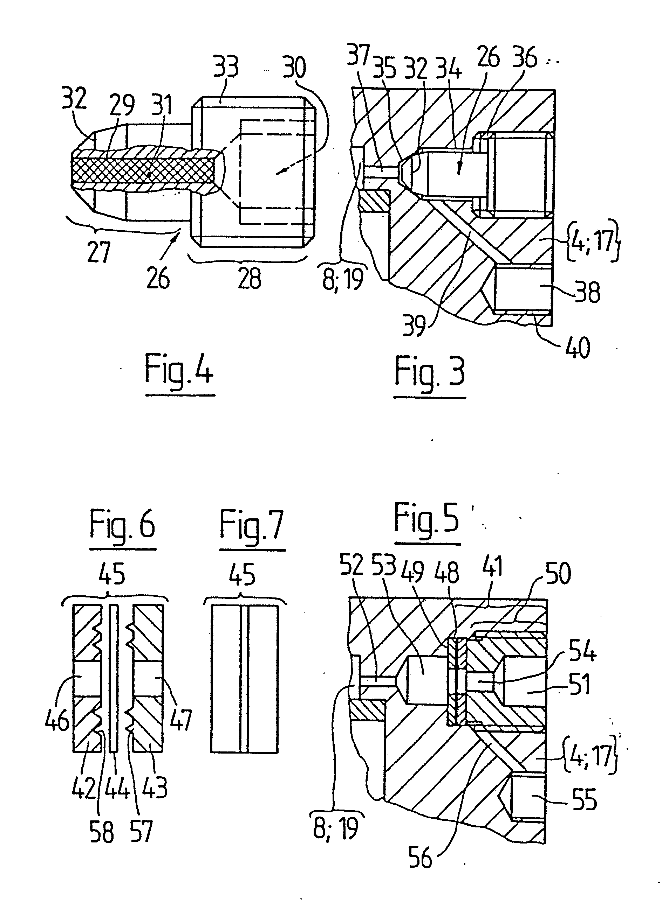

Fig.: 3 zeigt den mit dem Kreis A (Fig. 1) oder dem Kreis B (Fig. 2) gekennzeichneten Ausschnitt. In den mit A und B gekennzeichneten Ausschnitten sind die erfindungsgemässen Elemente allerdings nicht gezeigt. Die mit den Figuren 4 resp. 6 und 7 gezeigten und nachfolgend beschriebenen Abströmsicherungen können in der mit Fig. 1 oder in der mit Fig. 2 gezeigten Galette vorgesehen werden.

Eine Abströmsicherung in der Art einer Schmelzsicherung 26 (Fig. 3 und 4) umfasst ein Vorderteil 27 und ein Schraubteil 28. Eine Abströmbohrung 29 ist als durch das Vorderteil durchgehende, in einem sich im Schraubteil befindlichen Hohlraum 30 mündende Bohrung. Die Abströmöffnung 29 ist mit einem Schmelzlot 31 luftdicht ausgefüllt. Das Vorderteil 27 umfasst im weiteren eine Dichtkante 32. Der Hohlraum 30 ist als 6-kantiger Hohlraum ausgebildet, zur Aufnahme eines entsprechenden 6-kant-Schlüssels. Der Schraubteil 28 ist mit einem Aussengewinde 33 versehen.

Zur Aufnahme der Schmelzsicherung 26 in der Stirnwand 4 resp. 17 wird die Stirnwand mit einer Bohrung 34, welche mit einem Konus 35 endet, sowie mit einem dem Gewinde 33 entsprechenden Innengewinde 36 versehen. Die Schmelzsicherung 26 wird so weit in die Stirnwand hineingeschraubt, bis die Dichtkante 32 an der Fläche des Konus 35 dicht anliegt.

Um eine Verbindung zwischen Hohlraum 8 resp. 19 und Schmelzsicherung 26 herzustellen, ist in der Stirnwand 4 resp. 17 eine Verbindungsbohrung 37 vorgesehen.

Eine Einfüllöffnung 38 sowie ein Verbindungskanal 39 dienen dem Einfüllen des im Betrieb zu verdampfenden Mediums. Das Einfüllen geschieht derart, dass die Abströmsicherung 26 nur so weit hineingeschraubt wird, dass eine Verbindung zwischen der Verbindungsbohrung 37 und dem Verbindungskanal 39 bestehen bleibt.

Um die Einfüllöffnung 38 mit einem Anschlussnippel (nicht gezeigt) versehen zu können, ist diese Bohrung mit einem Innengewinde 40 versehen.

Die Kombination der Einfüllmittel (Einfüllöffnung 38, Kanal 39) mit den Sicherungsmitteln (Schmelzsicherung 26, Bohrung 37 etc.) ist nicht zwingend, jedoch vorteilhaft. Das Einfüllen könnte an einer anderen Stelle der Stirnwand 4 resp. 17 vorgesehen werden. Anstelle einer Schmelzsicherung 26 müsste eine Verschlußschraube (nicht gezeigt) vorgesehen werden.

In Fig. 5 ist anstelle einer Schmelzsicherung 26 eine Abströmsicherung 41 vorgesehen. Diese Abströmsicherung 41 umfasst eine Berstscheibe 45 und ein Anpressmittel 50. Die Berstscheibe 45 umfasst im wesentlichen einen Aufnahmeteil 42 (Fig. 6), einen Anpressteil 43 sowie einen dazwischenliegenden Berstteil 44. Die drei Teile zu einer Einheit zusammengepresst ergeben die sogenannte Berstscheibe 45 (Fig. 7), welche unter dem Markennamen "Remble" auf dem Markt erhältlich ist. Die Teile 42 und 43 sind je mit einer Durchgangsbohrung 46 resp. 47 von im wesentlichen gleichem Durchmesser versehen, während der Berstteil 44 keine solche Oeffnung aufweist. Zum Fixieren des Berstteiles im zusammengepressten Zustand sind Fixierzähne 57 im Anpressteil 43 und dazu passende Vertiefungen 58 im Aufnahmeteil 42 vorgesehen.

Zur Aufnahme der Berstscheibe 45 ist in der Stirnwand 4 resp. 17 eine zylindrische Bohrung 48 mit einer ringförmigen Bodenfläche 49 vorhanden. Das Anpressmittel 50 ist in Form einer in einem in der Stirnwand 4 resp. 17 entsprechenden Gewinde aufgenommenen Anpreßschraube vorgesehen, welche die Berstscheibe 45 dicht an die ringförmige Bodenfläche 49 anpresst. Durch dieses dichte Anpressen ist die Verbindung zwischen dem Hohlraum 8 resp. 19 und einer im Anpressteil 50 vorgesehenen Ausblasöffnung 51 unterbrochen. Für das Durchströmen des Mediums - bei geborstener Berstscheibe 45-vom Hohlraum 8 resp. 19 zur Ausblasöffnung 51 ist in der Stirnwand 4 resp. 17 eine Verbindungsbohrung 52 mit einer Erweiterung 53 und im Anpressmittel 50 eine mit der Ausblasöffnung 51 verbundene Verbindungsbohrung 54 vorgesehen.

Zum Einfüllen des im Betrieb zu verdampfenden Mediums ist in der Stirnwand 4 resp. 17 eine Einfüllöffnung 55 sowie ein Einfüllkanal 56 vorgesehen.

Zum Einfüllen des Mediums wird die Berstscheibe 45 nur so weit in die zylindrische Bohrung 48 hineingeschoben, dass eine Verbindung zwischen der Erweiterung 53 und dem Einfüllkanal 56 bestehen bleibt.

Wie bereits im Zusammenhang mit der Schmelzsicherung erwähnt, braucht das Einfüllen nicht mit der Abströmsicherung kombiniert zu werden.

Entsteht nun im Betrieb infolge Versagens der Temperaturregelung sowie der Temperatursicherung eine Temperatur über eine vorgegebene maximale Sicherheitstemperatur, so schmilzt entweder das Lot 31 in der Schmelzsicherung 26 oder es birst der Berstteil 44 im Bereich der Durchgangsbohrungen 46 und 47 in der Berstscheibe 45. Dadurch kann das unter zu hohem Druck stehende verdampfte Medium abblasen.

Um dieses Abblasen kontrolliert und relativ langsam in ungefährlicher Art durchzuführen, ist im Abströmweg zwischen dem geschlossenen Hohlraum 8, 19 und der freien Atmosphäre, mit Ausnahme der Durchgangsbohrungen 46 und 47, mindestens eine Stelle als Drosselstelle derart verengt, dass die Druckentlastung mindestens 0,5 sec. und höchstens 20 sec. dauert. Vorteilhafterweise werden die Verbindungsbohrung 37 und/oder die Abströmbohrung 29 und die Verbindungsbohrungen 52 und/ oder 54 als vorgenannte Drosselstelle vorgesehen. Der Durchmesser und die Länge der Drosselstelle hängen bei gegebenem Abblasdruck von der Menge des eingefüllten Mediums ab und müssen von Fall zu Fall errechnet werden.

Das Schmelzlot 31 soll beispielsweise für eine Schmelztemperatur zwischen 293-310° C vorgesehen werden, was bei Wasserfüllung einem Dampfdruck von 80-100 bar entspricht, d.h. die Berstscheibe muss im Bereich dieses Druckes bersten.

So, wie die Abströmsicherungen 26 resp. 41 entweder in der Galette 1 oder 14 verwendet werden können, sind sie auch nicht auf die alleinige Verwendung in diesen beiden Galetten eingeschränkt, sondern können grundsätzlich in allen mit Ueberdruck arbeitenden Galetten Verwendung finden.

### Patentansprüche

1. Heizbare Galette, z.B. Streckrolle (1; 14) zur Aufnahme von Fäden, z.B. Endlosfilamenten, mit einem allseitig geschlossenen Hohlraum (8; 19) für ein durch eine Heizvorrichtung (11) verdampfbares Medium, dadurch gekennzeichnet, dass der Hohlraum (8; 19) mit einer Abströmsicherung (26; 41) verbunden ist, dass in einem zwischen dem Hohlraum (8; 19) und der Atmosphäre liegenden, die Abströmsicherung beinhaltenden Abströmweg eine Stelle (37; 52 oder 54) als Drosselstelle verengt ist und, dass die Drosselstelle derart verengt ist, dass das Abströmen des Mediums mindestens 0,5 und höchstens 20 Sekunden dauert.

2. Heizbare Galette nach Anspruch 1, dadurch gekennzeichnet, dass die Abströmsicherung eine Schmelzsicherung (26) ist, bei welcher bei einer vorgegebenen Temperatur ein in einer Abströmbohrung (29) vorhandenes, die Abströmbohrung (29) unter normalen Betriebsbedingungen luftdicht abschliessendes Lot (31) schmilzt und dadurch die Abströmbohrung (29) für das Abströmen des Mediums freigibt.

3. Heizbare Galette nach Anspruch 1, dadurch gekennzeichnet, dass die Abströmsicherung eine Berstscheibe (45) ist, welche unter normalen Betriebsbedingungen eine Abströmöffnung (46) dicht abschliesst und bei einem vorgegebenen Druck im Bereich der Abströmöffnung (46) birst und dadurch die Abströmöffnung (46) für das Abströmen des Mediums freigibt.

### Claims

1. Heatable godet, e.g. drawroll (1; 14) for receiving threads, e.g. endless filaments, with a completely enclosed chamber (8; 19) for a medium vaporisable by a heating device (11), characterised in that the chamber (8; 19) is connected with a venting valve (26; 41), in that in an outflow path,which contains the valve and lies between the chamber (8; 19) and the atmosphere, a portion (37; 52 or 54) of the path converges to form a throttle position, and in that the throttle position converges in such manner that the outflow of the medium takes at least 0,5 and at most 20 seconds.

2. Heatable godet according to claim 1 characterised in that the venting valve is a fusible valve (26), in which a meltable material (31) melts at a predetermined temperature, the meltable material being provided in a venting bore (29) and hermetically sealing the bore (29) under normal operating conditions, melting of the material (31) opening the bore (29) for outflow of the medium.

3. Heatable godet according to claim 1 characterised in that the venting valve is a bursting disc (45) which tightly closes an outflow opening (46) under normal operating conditions and bursts in the region of the outflow opening (46) at a predetermined pressure and thus opens the outflow opening (46) for venting the medium.

### Revendications

1. Galet chauffant, par exemple rouleau d'étirage (1; 14) pour la réception de fils, par exemple de filaments sans fin, avec une chambre creuse fermée de tous les côtés (8; 19) pour recevoir un média vaporisable venant d'un dispositif de chauffage (11), caractérisé par le fait que la chambre creuse (8; 19) est reliée à une sécurité d'écoulement (26; 41), et que, dans le trajet d'écoulement entre la chambre creuse (8; 19) et l'atmosphère, qui comprend la sécurité d'écoulement, se trouve un endroit (37; 52 ou 54) qui est rétréci comme endroit d'étranglement, et que l'endroit d'étranglement est si étroit que l'écoulement du média dure au moins 0,5 seconde et au maximum 20 secondes.

2. Galet chauffant selon revendication 1, caractérisé par le fait que la sécurité d'écoulement est une sécurité par fusion (26), dans laquelle, pour une température pré-réglée, un fusible (31), se trouvant dans un trou d'écoulement (29), fond et, dans les conditions normales de fonctionnement, bouche hermétiquement le trou d'écoulement (29) et, de ce fait, libère le trou d'écoulement (29) pour l'écoulement du média.

3. Galet chauffant selon revendication 1, caractérisé par le fait que la sécurité d'écoulement est un disque d'éclatement (45), lequel, dans les conditions normales de fonctionnement, ferme hermétiquement l'ouverture d'écoulement (46) et éclate, pour une pression pré-réglée, dans la zone de l'ouverture d'écoulement (46) et, de ce fait, libère l'ouverture d'écoulement (46) pour l'écoulement du média.

Fig.1

Fig.2

Fig.4

Fig. 3

Fig. 6

Fig.7

Fig.5